# EUROPÄISCHE PATENTSCHRIFT

(11) **EP 2 047 965 B1**
(45) Veröffentlichungstag und Bekanntmachung des Hinweises auf die Patenterteilung: **01.05.2013**
(21) Anmeldenummer: 08166437.7
(22) Anmeldetag: 13.10.2008
(51) Int. Cl.: B29C 49/12, B29C 49/42, B29C 49/06, B29C 49/56

(54) **Reckstangenhalteanordnung**
Stretching rod holder assembly
Agencement de fixation de tige d'étirage

(30) Priorität: 12.10.2007 DE 102007049283
(43) Veröffentlichungstag der Anmeldung: 15.04.2009
(73) Patentinhaber: Krones AG, 93073 Neutraubling (DE)
(72) Erfinder: Fleischmann, Hans-Jürgen, 92449, Steinberg am See (DE); Blochmann, Erik, 93073, Neutraubling (DE); Geltinger, Florian, 93093 Donaustauf (DE)
(74) Vertreter: Bittner, Bernhard

(56) Entgegenhaltungen:
- EP-A1- 1 293 229
- WO-A1-95/33616
- FR-A1- 2 720 678
- US-A- 4 284 397
- US-A- 4 379 688
- US-A1- 2007 108 157

## Beschreibung

Die vorliegende Erfindung bezieht sich auf eine Reckstangenhalteanordnung. Im Rahmen der Herstellung von Kunststoffflaschen ist es üblich, dass Vorformlinge in eine Blasform eingelegt und in dieser Blasform beispielsweise mittels Druckluft expandiert werden. Weiterhin ist zum Expandieren dieser Vorformlinge üblicherweise eine Reckstange vorgesehen, welche während des Expansionsvorgangs eine Reckung des Vorformlings vornimmt. Im Stand der Technik nutzte man früher eine solche Reckstange zum Recken unterschiedlicher Kunststoffbehälter. Neuerdings wird jedoch bei der Herstellung von Kunststoffbehältern zunehmend auf Materialeinsparungen und gleichmäßige Verteilungen des Materials der Kunststoffflasche geachtet.

Daher werden auch des Öfteren beim Expandieren unterschiedlicher Behältnisse die üblicherweise an einem Träger angeordneten Reckstangen ausgewechselt.

Aus der EP 1 694 492 B1 ist eine Anordnung zum lösbaren Befestigen einer Reckstange an einem Schieber bekannt. Dabei weist die Reckstange an ihrem Außenumfang ein genau definiertes Außenprofil auf und ein Gehäuse weist ein auf dieses Außenprofil angepasstes Gegenprofil auf. Zum Einfügen der Reckstange wird die Reckstange in eine Position gedreht, in der sie durch eine Deckfläche des Gehäuses hindurchgeführt werden kann. Anschließend wird die Reckstange innerhalb des Behältnisses gedreht und kann auf diese Weise nicht mehr in ihrer Längsrichtung verschoben werden. Damit wird durch dieses Drehen der Reckstange gegenüber dem Gehäuse eine Arretierung der Reckstange ermöglicht. Diese Vorrichtung bietet eine schnelle Möglichkeit, um Reckstangen auszuwechseln. Allerdings ist es zu einem Auswechseln der Reckstangen erforderlich, dass diese gegenüber dem Gehäuse gedreht werden. Dies ist aufgrund der Zugänglichkeit der Reckstange oftmals problematisch. Weiterhin muss im Falle der EP 1 694 492 B1 eine Drehung der Reckstange gegenüber dem Gehäuse im Betriebszustand durch zusätzliche lösbare Arretierungsmittel verhindert werden.

US-A-2007108157 offenbart eine Reckstangenhalteanordnung gemäß dem Oberbegriff des Anspruchs 1.

Der vorliegenden Erfindung liegt daher die Aufgabe zugrunde, einen unkomplizierten und schnellen Wechselvorgang von Reckstangen zu ermöglichen, wobei gleichzeitig während des Arbeitsbetriebs eine hohe Stabilität der Reckstange gegenüber ihrer Halterung erreicht wird. Dies wird durch die Gegenstände der unabhängigen Ansprüche erreicht. Vorteilhafte Ausführungsformen und Weiterbildungen sind Gegenstand der Unteransprüche.

Bei eine nicht erfindungsgemäßen Reckstangenhalteanordnung mit einer Reckstange zum Expandieren von Kunststoffbehältnissen weist die Reckstange einen langgestreckten stangenförmigen Grundkörper, einen bezüglich dieses stangenförmigen Grundkörpers in einer radialen Richtung des stangenförmigen Grundkörpers herausragenden Haltekörper, sowie einen Reckkörper, der in den zu reckenden Behälter eingeführt wird, auf. Weiterhin ist ein Aufnahmeraum zur Halterung der Reckstange vorgesehen, wobei von diesem Aufnahmeraum wenigstens ein Bereich des Haltekörpers und bevorzugt der gesamte Haltekörper aufnehmbar ist und der Aufnahmeraum eine in der Längsrichtung der Reckstange untere Begrenzungswand aufweist wobei in dieser unteren Begrenzungswand eine Öffnung vorgesehen ist, durch die der Grundkörper der Reckstange nicht jedoch der Haltekörper hindurchtreten kann.

Erfindungsgemäß ist in der Längsrichtung der Reckstange oberhalb der unteren Begrenzungswand ein gegenüber dem Aufnahmeraum und der Reckstange zwischen wenigstens zwei Positionen bewegbarer Arretiermechanismus vorgesehen, wobei dieser Arretiermechanismus in der ersten Position ein Passieren des Haltekörpers in der Längsrichtung der Reckstang ermöglicht und in der zweiten Position ein Passieren des Haltekörpers der Reckstangen in der Längsrichtung der Reckstangen verhindert. Bevorzugt ist der Arretiermechanismus oberhalb des Aufnahmeraums vorgesehen und begrenzt diesen nach oben.

Der stangenförmige Grundkörper der Reckstange dient, wie oben erwähnt, zum Recken der Kunststoffbehältnisse während des Expansionsvorgangs. Der Haltekörper ist vorzugsweise mit dem Grundkörper verbunden, beispielsweise durch Schraubverbindungen oder dergleichen. Gegenüber dem Außenumfang des Grundkörpers ragt dieser Haltekörper heraus bzw. weist einen gegenüber dem Grundkörper herausragenden bzw. heraustretenden kreissegmentförmigen Vorsprung auf. Vorzugsweise kann der Haltekörper vollständig in dem Aufnahmeraum aufgenommen werden und wird im eingebauten Zustand in der Längsrichtung der Reckstange durch die untere Begrenzungswand einerseits und den beschriebenen Arretiermechanismus andererseits begrenzt. Während im Stand der Technik vorgesehen ist, dass die Reckstange zum Einbauen in das Gehäuse um die eigene Achse gedreht wird, ist ein derartiges Drehen und damit ein Greifen der Reckstange zum Arretieren derselben nicht nötig. Vielmehr wird vorteilhaft die Reckstange in einer genau definierten Drehposition in den Aufnahmeraum eingefügt und anschließend der Arretiermechanismus geschlossen, so dass ein Bewegen der Reckstange wieder heraus aus dem Aufnahmeraum verhindert wird. Vorzugsweise ist der Haltekörper an die Reckstange moniert. Es wäre jedoch auch möglich, dass die Reckstange bereits einteilig mit dem Haltkörper ausgebildet ist.

Bei einer weiteren vorteilhaften Ausführungsform weist die Anordnung Eingriffsmittel auf, die bewirken, dass die Reckstange in einem in dem Aufnahmeraum eingesetzten Zustand drehfest gegenüber dem Aufnahmeraum ist. Auf diese Weise wird, wie oben erwähnt, eine höhere Stabilität zwischen der Reckstange und dem Aufnahmeraum erreicht, ohne dass hierfür zusätzlich zu schließende Arretierungsmittel nötig sind.

Bei einer weiteren vorteilhaften Ausführungsform schließt sich in der Längsrichtung unterhalb der unteren Begrenzungswand an die untere Begrenzungswand ein Aufnahmekörper zur Aufnahme des Grundkörpers der Reckstange an, wobei dieser Aufnahmekörper den Grundkörper der Reckstange vollständig umgibt. Durch diesen weiteren Aufnahmekörper wird eine Führung der Reckstange in ihrer Längsrichtung verbessert. Der Vorgang des Wechselns wird jedoch durch diesen Aufnahmekörper nicht beeinträchtigt.

Bei einer weiteren vorteilhaften Ausführungsform ist zwischen der unteren Begrenzungswand und dem Haltekörper wenigstens eine Federeinrichtung angeordnet. Vorzugsweise handelt es sich bei der Federeinrichtung um wenigstens drei Federn, die insbesondere als Druckfedern ausgeführt sind. Beim Einbau der Reckstange in den Aufnahmeraum wird die Reckstange gegen die Kraft dieser Federeinrichtungen vorgespannt und anschließend wird der Arretiermechanismus geschlossen. Auf diese Weise wird durch die Federeinrichtungen eine höhere Stabilität der gesamten Anordnung erreicht.

Vorzugsweise ist oberhalb der Federeinrichtungen mindestens ein Druckelement oder mehrere Druckelemente, bevorzugt ein Druckring vorgesehen. Dieser Druckring bewirkt eine gleichmäßige Verteilung der Federkräfte der mehreren Federeinrichtungen auf den Haltekörper der Reckstange.

Bei einer weiteren vorteilhaften Ausführungsform weist die Anordnung eine Verriegelungseinrichtung auf, die den Arretiermechanismus in der zweiten Position verriegelt. Bei der zweiten Position handelt es sich um die geschlossene Position, in der die Reckstange in dem Aufnahmeraum arretiert ist. Diese Position soll durch die Verriegelungseinrichtung verriegelt und damit gesichert werden.

Bei einer weiteren vorteilhaften Ausführungsform weist die Verriegelungseinrichtung einen Stift auf, der in der Längsrichtung der Reckstange bewegbar ist. Vorzugsweise greift dieser Stift in eine Ausnehmung des Arretiermechanismus ein und verhindert damit ein weiteres Bewegen dieses Arretiermechanismus. Dabei wird bevorzugt der Arretiermechanismus in einer Ebene geschwenkt bzw. bewegt, zu der die Längsrichtung der Reckstange senkrecht steht.

Bei einer weiteren vorteilhaften Ausführungsform ist der Arretiermechanismus um eine Achse schwenkbar, wobei diese Schwenkachse parallel zu der Längsrichtung der Reckstange ist. Besonders bevorzugt liegt dabei diese Achse außerhalb des Grundkörpers der Reckstange und besonders bevorzugt auch radial außerhalb des Haltekörpers.

Bei einer weiteren vorteilhaften Ausführungsform fällt die Schwenkachse des Arretiermechanismus im Wesentlichen mit der Symmetrieachse des Grundkörpers der Reckstange zusammen.

Bei einer weiteren vorteilhaften Ausführungsform weist der Haltekörper einen kreissegmentförmigen oder kreisförmigen Querschnitt auf.

Bei einer weiteren vorteilhaften Ausführungsform weist der Haltekörper an seinem oberen Außenumfang eine Schrägfläche auf. Durch diese Schrägfläche kann erreicht werden, dass bei einem Schließvorgang des Arretiermechanismus der Haltekörper in Richtung der unteren Begrenzungswand des Aufnahmeraums gedrängt wird.

Bei einer weiteren vorteilhaften Ausführungsform weist der Arretiermechanismus eine halbkreisförmige Ausnehmung auf. Diese halbkreisförmige Ausnehmung kann zum Schließen über den Haltekörper der Reckstange geschoben werden. Dabei ist besonders bevorzugt der Arretiermechanismus an einem Punkt schwenkbar gegenüber dem Aufnahmeraum angeordnet und weist weiterhin eine, zwei oder mehrere Längsnuten auf, die einerseits den Arretiermechanismus in der Längsrichtung der Reckstange halten andererseits jedoch den Schwenkvorgang um die Schwenkachse ermöglichen.

Bei einer weiteren vorteilhaften Ausführungsform weist der Haltekörper ein nicht kreisförmiges Querschnittsprofil auf und ein Innenumfang des Arretierungsmechanismus weist ein an dieses Querschnittsprofil angepasstes Querschnittsprofil auf. Dabei wird jedoch im Gegensatz zum Stand der Technik nicht die Reckstange selbst gedreht, sondern der Arretiermechanismus wird in eine bestimmte Position gedreht, anschließend die Reckstange mit dem Haltekörper in den Aufnahmeraum eingeführt und schließlich der Arretiermechanismus wiederum gedreht, um die Reckstange in dem Aufnahmeraum zu arretieren.

Die folgende Erfindung ist weiterhin auf eine Vorrichtung zum Expandieren von Behältnissen mit einer Blasform und einer Reckstangenhalteanordnung der oben beschriebenen Art gerichtet.

Weitere Vorteile und Ausführungsformen ergeben sich aus den beigefügten Zeichnungen.

Darin zeigen:
- Fig. 1: eine perspektivische Darstellung einer erfindungsgemäßen Reckstangenhalteanordnung in einer ersten Ausführungsform;
- Fig. 2: eine Draufsicht auf die Reckstangenhalteanordnung aus Fig. 1;
- Fig. 3: eine Seitenansicht der Reckstangenhalteanordnung aus Fig. 2 entlang der Linie A-A aus Fig. 2;
- Fig. 4: eine Seitenansicht der Reckstangenhalteanordnung aus Fig. 2 entlang der Linien B-B aus Fig. 2;
- Fig. 5: eine erfindungsgemäße Reckstangenhalteanordnung in einer weiteren Ausführungsform;
- Fig. 6: eine Draufsicht auf die Reckstangenhalteanordnung aus Fig. 5;
- Fig. 7: eine Seitenansicht der Reckstangenhalteanordnung aus Fig. 6 entlang der Linie A-A in Fig. 6; und
- Fig. 8: eine perspektivische Darstellung der Reckstangenanordnung aus Fig. 5.

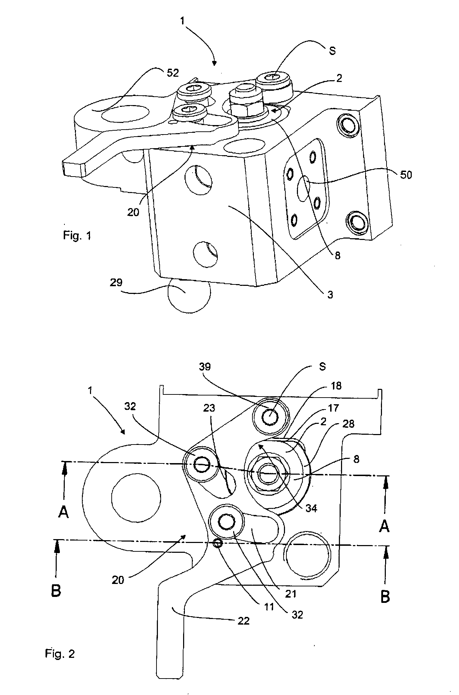

Fig. 1 zeigt eine Reckstangenhalteanordnung 1 in einer ersten Ausführungsform. Dabei bezieht sich das Bezugszeichen 2 auf einen Reckstange, die in ein Gehäuse 3 eingeschoben wird. Dabei wird die Reckstange 2 entlang ihrer Längsrichtung in dieses Gehäuse 3 eingeschoben.

Die Reckstange 2 weist einen Haltkörper 8 auf, der hier ein abschnittsweise kreisförmiges Profil aufweist. Dieser Haltekörper 8 wird dabei in eine in Fig. 1 nicht dargestellte Mulde eingesetzt, welche gleichzeitig den Aufnahmeraum für den Haltekörper 8 bzw. die Reckstange 2 bildet. Die Reckstange 2 weist außerdem einen Reckkörper 6a auf, der dann tatsächlich in einen zu reckenden Behälter eingeführt wird und mit diesem in Kontakt kommt.

Das Bezugszeichen 20 bezeichnet in seiner Gesamtheit einen Arretiermechanismus, der, wie oben erwähnt, in einer Position die Reckstange 2 gegenüber dem Gehäuse 3 arretiert und in einer anderen Position eine Bewegung der Reckstange 2 in ihrer Längsrichtung erlaubt und damit ein Herausnehmen oder Einfügen in die Reckstange 2 in das Gehäuse 3 ermöglicht. Das Bezugszeichen 52 bezieht sich auf einen Befestigungskörper, um das Gehäuse an weiteren Einrichtungen, wie beispielsweise einem Schieber, anzuordnen.

Über eine Zuführung 50 kann der im Inneren des Gehäuses 3 angeordneten Reckstange 2 bzw. dem Grundkörper 6 dieser Reckstange 2 Luft zum Expandieren von Behältnissen zugeführt werden. Der Arretiermechanismus 20 ist um eine Schwenkachse S schwenkbar. In Fig. 1 und auch in den anderen Figuren ist der Arretiermechanismus 20 in der Position gezeigt, in der ein Passieren des Haltekörpers und damit auch der Reckstange verhindert wird, das heißt einer arretierten Position. Durch Schwenken des Griffes 22 um die Schwenkachse im Urzeigersinn kann der Arretiermechanismus 20 geöffnet werden.

Fig. 2 zeigt eine Draufsicht auf die Reckstangenhalteanordnung aus Fig. 1. Man erkennt, dass an dem Gehäuse 3 hier drei Schraubkörper 32 und 39 angeordnet sind. Dabei ist der Schraubkörper 39 an der Schwenkachse S angeordnet und der Arretiermechanismus 20 wird hier um diese Schwenkachse geschwenkt. Auch die beiden Schraubkörper 32 sind fest gegenüber dem Gehäuse 3 positioniert.

Die Bezugszeichen 21 und 23 beziehen sich auf Langlöcher, die in dem Arretiermechanismus 20 vorgesehen sind. Diese Langlöcher definieren gleichzeitig auch den Schwenkbereich, um den der Arretiermechanismus 20 geschwenkt werden kann. Der Haltekörper 8 der Reckstange 2 weist an seiner Oberfläche eine Schrägfläche 28 auf. Diese Schrägfläche dient ebenfalls zum Arretieren der Reckstange. Genauer wird bei einem Schwenken des Arretiermechanismus entgegen des Urzeigersinns, das heißt dem Arretierungsvorgang der Schwenkhebel über diese Schrägfläche 28 geschoben, und drückt auf diese Weise den Haltekörper 8 und damit auch die Reckstange 2 nach unten.

Das Bezugszeichen 34 bezieht sich auf eine Ausnehmung in dem Arretiermechanismus 20. Diese Ausnehmung 34 ist so gestaltet, dass in dem geöffneten Zustand des Schwenkhebels der Haltekörper der Reckstange an dieser Ausnehmung vorbeigeführt werden kann. Man erkennt weiterhin, dass der Haltekörper 8 nicht exakt kreisförmig ausgebildet ist, sondern eine Abflachung 17 aufweist. Entsprechend weist auch der Aufnahmeraum in dem Gehäuse 3 eine entsprechende geradlinige Kante 18 auf. Auf diese Weise wird erreicht, dass die Reckstange 2 nur in einer genau definierten Drehstellung in das Gehäuse 3 eingesetzt werden kann und, nachdem sie dort eingesetzt wurde, nicht mehr gegenüber dem Gehäuse 3 gedreht werden kann.

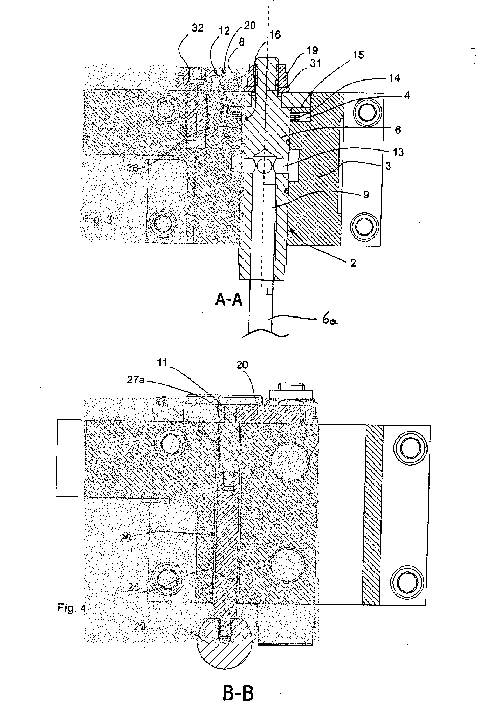

Fig. 3 zeigt eine Seitenansicht der Reckstangenhalteanordnung 1 aus Fig. 2 entlang der Linie A-A aus Fig. 2. Man erkennt, dass die Reckstange 2 neben dem Haltekörper 8 einen stangenförmigen Grundkörper 6 aufweist. Innerhalb des stangenförmigen Grundkörpers 6 ist ein Rohr 9 vorgesehen, durch welches hindurch über eine Zuführung 13 der Reckstange und damit auch den Behältnissen Luft zugeführt werden kann. Das Bezugszeichen 19 bezieht sich auf einen Schraubkörper, der zur Befestigung des Haltekörpers an dem Grundkörper 6 der Reckstange 2 dient. Zu diesem Zweck wird der Schraubkörper 19 gemeinsam mit einer Beilagscheibe 31 auf die Reckstange 2 geschraubt und drückt auf diese Weise den Haltekörper 8 in eine entsprechend angepasste Ausnehmung des Grundkörpers 6.

Das Bezugszeichen 4 bezieht sich auf einen Aufnahmeraum bzw. eine Ausnehmung in dem Gehäuse 3, in den der Haltekörper 8 eingeschoben wird. Dieser Aufnahmeraum 4 wird durch eine untere Begrenzungswand 12 begrenzt. Diese untere Begrenzungswand 12 weist eine Öffnung 16 auf, durch die nur der Grundkörper 6 der Reckstange 2, nicht jedoch der Haltekörper 8 hindurchtreten kann. Weiterhin sind an der unteren Begrenzungswand Federn, genauer gesagt drei Druckfedern 14 vorgesehen, und oberhalb dieser Druckfedern ein Druckring 15, der auf diese Weise eine Kraft nach oben auf den Halteköper 8 ausübt. Durch diese Druckfedern 14 wird im Zusammenspiel mit dem Arretiermechanismus erreicht, dass die Reckstange auch in ihrer Längsrichtung gegenüber dem Gehäuse 3 fixiert wird. Das Bezugszeichen 32 bezieht sich auch hier wieder auf die Schraubverbindung, welche zwar eine Schwenkbewegung des Arretiermechanismus 20 ermöglicht, nicht jedoch ein Loslösen in der Längsrichtung L der Reckstange 2.

Unterhalb des Aufnahmeraums 4 schließt sich ein Aufnahmekörper 38 zur Aufnahme des Grundkörpers 6 an. Dieser Aufnahmekörper 38 umgibt dabei den Grundkörper 6 der Reckstange 2 im Wesentlichen vollständig und führt ihn auch gleichzeitig, so dass die Reckstange 2 auch in ihrer radialen Richtung fest gelagert ist.

Fig. 4 zeigt eine Seitenansicht der in Fig. 2 gezeigten Vorrichtung entlang der Linie B-B aus Fig. 2. Dabei ist hier die Verriegelungseinrichtung 26 dargestellt, die den Arretiermechanismus 20 verriegelt. Genauer gesagt wird mit Hilfe der Verriegelungseinrichtung 26 der Arretiermechanismus 20 in der geschlossenen Position fixiert. Zu diesem Zweck weist die Verriegelungseinrichtung 26 einen Stift 27 mit einem Druckteil 27a auf, die in eine entsprechend angepasste Öffnung 11 in dem Arretiermechanismus 20 (auch in Fig. 2 gezeigt) eintreten kann, und auf diese Weise ein Schwenken des Arretiermechanismus verhindert. In der geöffneten Position wird der Stift 27 in der Öffnung 11a fixiert. Das Bezugszeichen 25 bezieht sich auf eine Stange, die in Verbindung mit dem Stift 27 steht und über einen Kugelgriff 29 ein Herausziehen desselben ermöglicht. Dabei ist es möglich, dass die Verriegelungseinrichtung federbelastet nach oben gedrückt wird, um automatisch in eine verriegelte Position überzugehen.

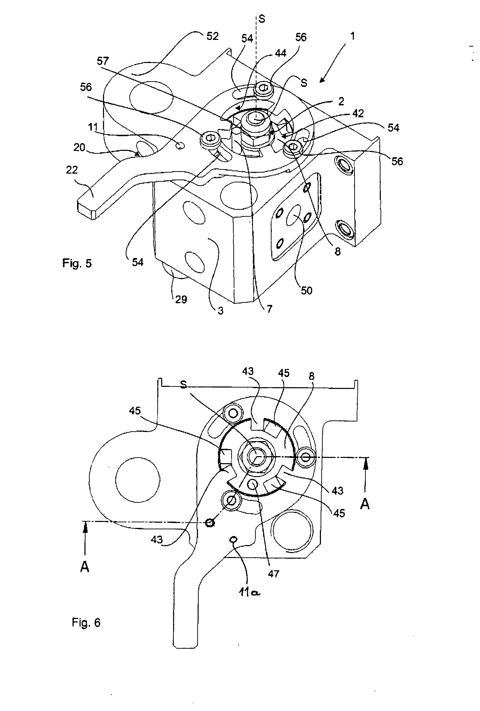

Fig. 5 zeigt eine weitere Ausführungsform einer erfindungsgemäßen Reckstangenhalteanordnung 1. Während im Falle der Fig. 1 - 4 der Arretiermechanismus 20 eine halbkreisförmige Ausnehmung 34 aufweist, weist er im Falle der in den Fig. 5 - 8 gezeigten Ausführungsform ein geschlossenes Querschnittsprofil 44 auf. Entsprechend weist bei dieser Ausführungsform auch die Reckstange bzw. der Haltkörper 8 der Reckstange ein auf das Querschnittsprofil 44 des Arretiermechanismus 20 angepasstes Querschnittsprofil 42 auf.

Zum Einfügen wird die Reckstange 2 ebenfalls in einer definierten Position in das Gehäuse 3 bzw. den Aufnahmeraum 4 eingeschoben und anschließend wird der Arretiermechanismus 20 um die Schwenkachse S geschwenkt, wobei die Schwenkachse S hier im Wesentlichen im Zentrum des Querschnittsprofils 44 angeordnet ist. Zu diesem Zweck weist der Arretiermechanismus drei Langlöcher 54 auf, die ein Schwenken des Arretiermechanismus um einen vorgegebenen Winkel gegenüber dieser Schwenkachse ermöglichen. Das Bezugszeichen 57 bezieht sich hier auf eine Schraubenmutter, die zum Befestigen des Haltekörpers an dem Grundkörper 6 der Reckstange dient. In den Langlöchern werden die Verschraubungen 56 geführt.

Fig. 6 zeigt eine Draufsicht auf die Reckstangenhalteanordnung aus Fig. 5. Man erkennt, dass das Querschnittsprofil 44 des Innenumfangs der Arretierungseinrichtung 3 radial nach innen weisende Vorsprünge 43 aufweist und entsprechend der Haltekörper 8 drei auf diese Vorsprünge angepasste Ausnehmungen 45. Das Bezugszeichen 47 bezieht sich auf eine Öffnung, die in dem Haltekörper vorgesehen ist und wiederum zum Zentrieren der Reck-stange dient. In diese Öffnung 47 wird der in Fig. 5 gezeigte Stift 7 eingeführt. Es wäre jedoch bei der in Fig. 6 gezeigten Ausführungsform auch möglich, die Vorsprünge 43 in Umfangsrichtung nicht gleichmäßig sondern ungleichmäßig zu verteilen und auf diese Weise nur eine genaue Drehstellung der Reckstange zuzulassen. Auch könnten die Vorsprünge 43 unterschiedlich ausgestaltet werden, um die gewünschte Fixierung der Drehstellung der Reckstange zu erreichen.

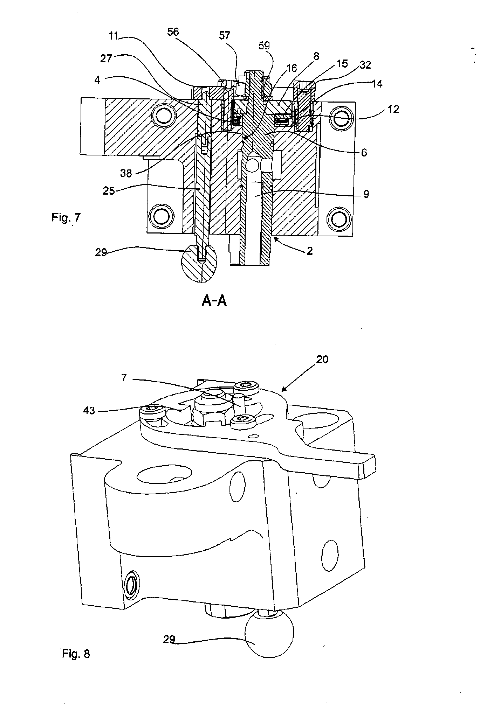

Damit ist auch bei der in Fig. 7 gezeigten Ausführungsform beim Einsetzen der Reckstange 2 der Arretierungsmechanismus 20 geöffnet, das heißt in der (nicht gezeigten) Position . Auch in dieser Position wird der Arretierungsmechanismus mit Hilfe des Stiftes 27 bzw. des Druckstücks 27a gehalten. Zum Öffnen aus der verschlossenen Stellung wird die Verriegelungseinrichtung 26, wie oben erwähnt, mit einem Kugelgriff 29 nach unten gezogen. Während des Verriegelungsvorgangs gleiten die Vorsprünge 43 über an dem Haltekörper 8 (nicht gezeigte) Schrägen und drücken auf diese Weise den Haltekörper 8 gegen den auch hier darunter liegenden Druckring 15, wobei auch auf diese Weise unter dem Druckring angeordnete Federn 14 belastet werden. Die Druckfedern 14 gleichen das Spiel zwischen dem Arretiermechanismus 20 und dem Haltekörper 8 aus, um auf diese Weise im Betriebszustand ein Spiel zwischen diesen Bauteilen zu verhindern.

Die in Fig. 7 gezeigte Darstellung entspricht teilweise der in Fig. 3 gezeigten Darstellung, so dass insoweit auf die obige Ausführung verwiesen wird. Auch bei dieser Ausführungsform sind, wie oben erwähnt, drei Verschraubungen 56 vorgesehen, die jedoch in der Umfangsrichtung der Arretiereinrichtung 20 gleichmäßig verteilt sind und auf diese Weise auch eine gleichmäßige Verteilung der in axialer Richtung der Reckstange 2 wirkenden Kraft ermöglichen.

Fig. 8 zeigt eine weitere perspektivische Darstellung der Reckstangenhalteanordnung aus Fig. 5. Man erkennt hier den Stift 7, der durch die in Fig. 6 gezeigte Öffnung 47 geführt wird und auf diese Weise die Drehstellung der Reckstange 2 fixiert.

## Patentansprüche

1. Reckstangenhalteanordnung (1) mit einer Reckstange (2) zum Expandieren von Kunststoffbehältnissen, wobei die Reckstange (2) einen langgestreckten stangenförmigen Grundkörper (6) und einen bezüglich dieses stangenförmigen Grundkörpers in einer radialen Richtung des stangenförmigen Grundkörpers herausragenden Haltekörper (8) sowie einen Reckkörper (6a) aufweist, mit einem Aufnahmeraum (4) zur Halterung der Reckstange (2) in einem Gehäuse (3), wobei von diesem Aufnahmeraum (4) wenigstens ein Bereich des Haltekörpers (8) aufnehmbar ist und der Aufnahmeraum (4) eine in der Längsrichtung (L) der Reckstange (2) untere Begrenzungswand (12) aufweist, und wobei in dieser unteren Begrenzungswand eine Öffnung (16) vorgesehen ist, durch die der Grundkörper (6) hindurchtreten kann,
**dadurch gekennzeichnet, dass** in der Längsrichtung (L) der Reckstange (2) oberhalb der unteren Begrenzungswand (12) ein gegenüber dem Aufnahmeraum (4) zwischen wenigstens zwei Positionen bewegbarer Arretiermechanismus (20) vorgesehen ist, wobei dieser Arretiermechanismus (20) in der ersten Position ein Passieren des Haltekörpers (8) in der Längsrichtung (L) der Reckstange (2) ermöglicht und in der zweiten Position ein Passieren des Haltekörpers (8) der Reckstange (2) verhindert und die Reckstange (2) ohne eine Drehung um ihre eigene Achse in das Gehäuse (3) einbaubar ist.

2. Anordnung (1) nach Anspruch 1,
**dadurch gekennzeichnet, dass** der Haltekörper (8) an die Reckstange (2) montiert ist.

3. Anordnung (1) nach Anspruch 1,
**dadurch gekennzeichnet, dass** der Grundkörper (6) und der Reckkörper (6a) einteilig ausgebildet sind.

4. Anordnung (1) nach Anspruch 3,
**dadurch gekennzeichnet, dass** der Grundkörper (6), der Reckkörper (6a) und der Haltekörper (8) einteilig ausgebildet sind.

5. Anordnung nach wenigstens einem der vorangegangenen Ansprüche,
**dadurch gekennzeichnet, dass** die Anordnung (1) Eingriffsmittel (7, 47) aufweist, die bewirken, dass die Reckstange (2) in einem in den Aufnahmeraum (4) eingesetzten Zustand drehfest gegenüber dem Aufnahmeraum (4) ist.

6. Anordnung (1) nach wenigstens einem der vorangegangenen Ansprüche,
**dadurch gekennzeichnet, dass** sich in der Längsrichtung (L) unterhalb der unteren Begrenzungswand (12) an die Begrenzungswand (12) ein Aufnahmekörper (38) zur Aufnahme des Grundkörpers (6) der Reckstange (2) anschließt, wobei dieser Aufnahmekörper (38) den Grundkörper (6) vollständig umgibt.

7. Anordnung (1) nach wenigstens einem der vorangegangenen Ansprüche,
**dadurch gekennzeichnet, dass** zwischen der unteren Begrenzungswand (12) und dem Haltekörper (8) wenigstens eine Federeinrichtung (14) angeordnet ist.

8. Anordnung (1) nach Anspruch 5,
**dadurch gekennzeichnet**, **das s** oberhalb der Federeinrichtung (14) mindestens ein Druckring (15) vorgesehen ist.

9. Anordnung (1) nach wenigstens einem der vorangegangenen Ansprüche,
**dadurch gekennzeichnet, dass** die Anordnung (1) eine Verriegelungseinrichtung (26) aufweist, die den Arretiermechanismus (20) in der zweiten Position verriegelt.

10. Anordnung nach wenigstens einem der vorangegangenen Ansprüche,
**dadurch gekennzeichnet, dass** der Arretiermechanismus (20) um eine Achse (S) schwenkbar ist, wobei diese Schwenkachse parallel zu der Längsrichtung (L) der Reckstange (2) ist.

11. Anordnung (1) nach Anspruch 9,
**dadurch gekennzeichnet, dass** die Schwenkachse (S) in der radialen Richtung der Reckstange (2) außerhalb des Haltekörpers (8) verläuft.

12. Anordnung (1) nach wenigstens einem der vorangegangenen Ansprüche,
**dadurch gekennzeichnet, dass** der Haltekörper (8) an seinem oberen Außenumfang eine Schrägfläche (28) aufweist.

13. Anordnung (1) nach wenigstens einem der vorangegangenen Ansprüche,
**dadurch gekennzeichnet, dass** der Haltekörper (8) ein nicht kreisförmiges Querschnittsprofil (42) aufweist und ein Innenumfang des Arretierungsmechanismus (20) ein auf dieses Querschnittsprofil (42) angepasstes Querschnittsprofil (44).

14. Anordnung nach Anspruch 13,
**dadurch gekennzeichnet, dass** die Querschnittsprofile (42, 44) in Umfangsrichtung gleichmäßig ausgebildet sind.

15. Vorrichtung zum Expandieren von Behältnissen mit einer Blasform und einer Anordnung (1) nach wenigsten einem der vorangegangenen Ansprüche.

## Claims

1. Stretching rod holding arrangement (1) comprising a stretching rod (2) for expanding plastic containers, wherein the stretching rod (2) has an elongate rod-shaped main body (6) and a holding body (8) which protrudes with respect to this rod-shaped main body in a radial direction of the rod-shaped main body, and also a stretching body (6a), and comprising a receiving space (4) for mounting the stretching rod (2), in a housing (3) wherein at least one region of the holding body (8) can be received by this receiving space (4) and the receiving space (4) has a lower boundary wall (12) in the longitudinal direction (L) of the stretching rod (2), and wherein an opening (16) is provided in this lower boundary wall, through which opening the main body (6) can pass, **characterised in that** an arresting mechanism (20) which can be moved with respect to the receiving space (4) between at least two positions is provided above the lower boundary wall (12) in the longitudinal direction (L) of the stretching rod (2), wherein this arresting mechanism (20) in the first position allows the passage of the holding body (8) in the longitudinal direction (L) of the stretching rod (2) and in the second position prevents the passage of the holding body (8) of the stretching rod (2), and wherein the stretching rod may be mounted into the housing (3) without a rotation around its own axis.

2. Arrangement (1) according to claim 1, **characterised in that** the holding body (8) is mounted on the stretching rod (2).

3. Arrangement (1) according to claim 1, **characterised in that** the main body (6) and the stretching body (6a) are formed in one piece.

4. Arrangement (1) according to claim 3, **characterised in that** the main body (6), the stretching body (6a) and the holding body (8) are formed in one piece.

5. Arrangement according to at least one of the preceding claims, **characterised in that** the arrangement (1) has engagement means (7, 47) which cause the stretching rod (2), in a state inserted into the receiving space (4), to be held in a rotationally fixed manner relative to the receiving space (4).

6. Arrangement (1) according to at least one of the preceding claims, **characterised in that** a receiving body (38) for receiving the main body (6) of the stretching rod (2) adjoins the boundary wall (12) in the longitudinal direction (L) below the lower boundary wall (12), wherein this receiving body (38) completely encloses the main body (6).

7. Arrangement (1) according to at least one of the preceding claims, **characterised in that** at least one spring device (14) is arranged between the lower boundary wall (12) and the holding body (8).

8. Arrangement (1) according to claim 5, **characterised in that** at least one pressure ring (15) is provided above the spring device (14).

9. Arrangement (1) according to at least one of the preceding claims, **characterised in that** the arrangement (1) has a locking device (26) which locks the arresting mechanism (20) in the second position.

10. Arrangement according to at least one of the preceding claims, **characterised in that** the arresting mechanism (20) can pivot about an axis (S), wherein this pivot axis is parallel to the longitudinal direction (L) of the stretching rod (2).

11. Arrangement (1) according to claim 9, **characterised in that** the pivot axis (S) runs outside the holding body (8) in the radial direction of the stretching rod (2).

12. Arrangement (1) according to at least one of the preceding claims, **characterised in that** the holding body (8) has an inclined surface (28) on its upper outer circumference.

13. Arrangement (1) according to at least one of the preceding claims, **characterised in that** the holding body (8) has a non-circular cross-sectional profile (42) and an inner circumference of the arresting mechanism (20) has a cross-sectional profile (44) adapted to this cross-sectional profile (42).

14. Arrangement according to claim 13, **characterised in that** the cross-sectional profiles (42, 44) are of uniform shape in the circumferential direction.

15. Apparatus for expanding containers, comprising a blow mould and an arrangement (1) according to at least one of the preceding claims.

## Revendications

1. Dispositif de maintien de barre d'étirage (1) avec une barre d'étirage (2) pour l'expansion de récipients en matière plastique, la barre d'étirage (2) présentant un corps de base (6) oblong en forme de barre et un corps de maintien (8) faisant saillie dans une direction radiale du corps de base en forme de barre par rapport audit corps de base en forme de barre, ainsi qu'un corps d'étirage (6a), avec un compartiment de réception (4) pour le support de la barre d'étirage (2) dans un boîtier (3), au moins une partie du corps de maintien (8) pouvant être logée dans ledit compartiment de réception (4) et le compartiment de réception (4) présentant une paroi de délimitation inférieure (12) dans la direction longitudinale (L) de la barre d'étirage (2), et une ouverture (16) étant prévue dans ladite paroi de délimitation, au travers de laquelle le corps de base (6) peut passer,
**caractérisé en ce que**
dans la direction longitudinale (L) de la barre d'étirage (2) au-dessus de la paroi de délimitation inférieure (12), il est prévu un mécanisme d'arrêt (20) déplaçable entre au moins deux positions par rapport au compartiment de réception (4), ledit mécanisme d'arrêt (20) permettant un passage du corps de maintien (8) dans la direction longitudinale (L) de la barre d'étirage (2) dans la première position, et empêchant un passage du corps de maintien (8) de la barre d'étirage (2) dans la deuxième position, et la barre d'étirage (2) pouvant être montée dans le boîtier (3) sans rotation autour de son axe propre.

2. Dispositif (1) selon la revendication 1,
**caractérisé en ce que**
le corps de maintien (8) est monté contre la barre d'étirage (2).

3. Dispositif (1) selon la revendication 1,
**caractérisé en ce que**
le corps de base (6) et le corps d'étirage (6a) sont réalisés en une seule pièce.

4. Dispositif (1) selon la revendication 3,
**caractérisé en ce que**
le corps de base (6), le corps d'étirage (6a) et le corps de maintien (8) sont réalisés en une seule pièce.

5. Dispositif selon au moins une des revendications précédentes,
**caractérisé en ce que**
ledit dispositif (1) comporte des moyens d'engrènement (7, 47) qui assurent que la barre d'étirage (2) soit solidaire en rotation par rapport au compartiment de réception (4) dans un état de mise en place dans le compartiment de réception (4).

6. Dispositif (1) selon au moins une des revendications précédentes,
**caractérisé en ce qu'**
un corps de réception (38) pour le logement du corps de base (6) de la barre d'étirage (2) est adjacent à la paroi de délimitation (12) dans la direction longitudinale (L) en dessous de la paroi de délimitation inférieure (12), ledit corps de réception (38) entourant complètement le corps de base (6).

7. Dispositif (1) selon au moins une des revendications précédentes,
**caractérisé en ce qu'**
au moins un dispositif de ressort (14) est disposé entre la paroi de délimitation inférieure (12) et le corps de maintien (8).

8. Dispositif (1) selon la revendication 5,
**caractérisé en ce qu'**
au moins une bague de serrage (15) est prévue au-dessus du dispositif de ressort (14).

9. Dispositif (1) selon au moins une des revendications précédentes,
**caractérisé en ce que**
ledit dispositif (1) comporte un dispositif de verrouillage (26) qui bloque le mécanisme d'arrêt (20) dans la deuxième position.

10. Dispositif selon au moins une des revendications précédentes,
**caractérisé en ce que**
le mécanisme d'arrêt (20) est pivotant autour d'un axe (S), ledit axe de pivotement étant parallèle à la direction longitudinale (L) de la barre d'étirage (2).

11. Dispositif (1) selon la revendication 9,
**caractérisé en ce que**
l'axe de pivotement (S) s'étend dans la direction radiale de la barre d'étirage (2) en dehors du corps de maintien (8).

12. Dispositif (1) selon au moins une des revendications précédentes,
**caractérisé en ce que**
le corps de maintien (8) présente une surface inclinée (28) sur sa périphérie extérieure supérieure.

13. Dispositif (1) selon au moins une des revendications précédentes,
**caractérisé en ce que**
le corps de maintien (8) présente un profil de section transversale (42) non circulaire et **en ce qu'**une périphérie intérieure du mécanisme d'arrêt (20) présente un profil de section transversale (44) ajusté audit profil de section transversale (42).

14. Dispositif selon la revendication 13,
**caractérisé en ce que**
les profils de sections transversales (42, 44) sont réalisés de manière uniforme dans la direction périphérique.

15. Installation pour l'expansion de récipients avec un moule de soufflage et un dispositif (1) selon au moins une des revendications précédentes.
